(19) Europäisches Patentamt
European Patent Office
Office européen des brevets

(11) **EP 2 357 262 B1**

(12) **EUROPEAN PATENT SPECIFICATION**

(45) Date of publication and mention
of the grant of the patent:
**09.04.2014  Bulletin 2014/15**

(51) Int Cl.:
*B21K 1/08* *(2006.01)*    *C21D 7/13* *(2006.01)*
*C23C 8/26* *(2006.01)*    *C22C 38/02* *(2006.01)*
*C22C 38/06* *(2006.01)*    *C22C 38/22* *(2006.01)*
*C22C 38/24* *(2006.01)*    *C22C 38/38* *(2006.01)*
*C22C 38/44* *(2006.01)*    *C22C 38/46* *(2006.01)*
*C22C 38/58* *(2006.01)*    *C22C 38/60* *(2006.01)*
*F16C 3/08* *(2006.01)*    *C21D 9/30* *(2006.01)*
*C22C 38/00* *(2006.01)*    *C22C 38/04* *(2006.01)*

(21) Application number: **11152537.4**

(22) Date of filing: **28.01.2011**

(54) **Production method for a crankshaft**

Herstellungsverfahren für eine Kurbelwelle

Procédé de fabrication pour un vilebrequin

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.01.2010   JP 2010016615**

(43) Date of publication of application:
**17.08.2011   Bulletin 2011/33**

(73) Proprietor: **Honda Motor Co., Ltd.
Tokyo 107-8556 (JP)**

(72) Inventors:
 • **Masuda, Hiroki**
   **Saitama 351-0193 (JP)**
 • **Kawahito, Yasushi**
   **Saitama 351-0193 (JP)**
 • **Matsuda, Hideki**
   **Saitama 351-0193 (JP)**
 • **Tanaka, Takashi**
   **Saitama 351-0193 (JP)**
 • **Tsunashima, Sakae**
   **Saitama 351-0193 (JP)**
 • **Kobayashi, Seiji**
   **Saitama 351-0193 (JP)**

(74) Representative: **Böhm, Brigitte et al
Postfach 860820
81635 München (DE)**

(56) References cited:
**EP-A1- 1 426 453        EP-A1- 1 889 929
WO-A2-2009/138586    JP-A- 2008 223 083
JP-A- 2010 189 697      KR-A- 20090 049 638
US-A1- 2007 119 519**

**Description**

BACKGROUND OF THE INVENTION

Technical Field

The present invention relates to a crankshaft production method, and in particular, the present invention relates to a technique for obtaining both high fatigue strength and high machinability.

Background Art

Automobile crankshafts are required to have high wear resistance and high fatigue strength. Generally, crankshafts are formed by hot forging. For example, according to the inventions disclosed in Japanese Unexamined Patent Applications Publication Nos. 2007-146232 and 2008-223083, in order to satisfy the above-described requirements, a crankshaft is cooled at a predetermined cooling rate after hot forging so as to form a bainite structure, and the crankshaft is soft-nitrided.
However, in the inventions disclosed in Japanese Unexamined Patent Application Publication Nos. 2007-146232 and 2008-223083, there are cases in which large amounts of ferrite are generated at a part of the crankshaft during hot forging and cooling after solution treatment. This is because of processing strain and variation of cooling rate, which are caused by convenience of processing and the shape of the crankshaft. If ferrite is generated, carbon is dispersed from the ferrite portion to the other portion and precipitates alloy carbides. Therefore, age hardening is not obtained by heat of the nitriding, whereby required fatigue strength cannot be obtained.

SUMMARY OF THE INVENTION

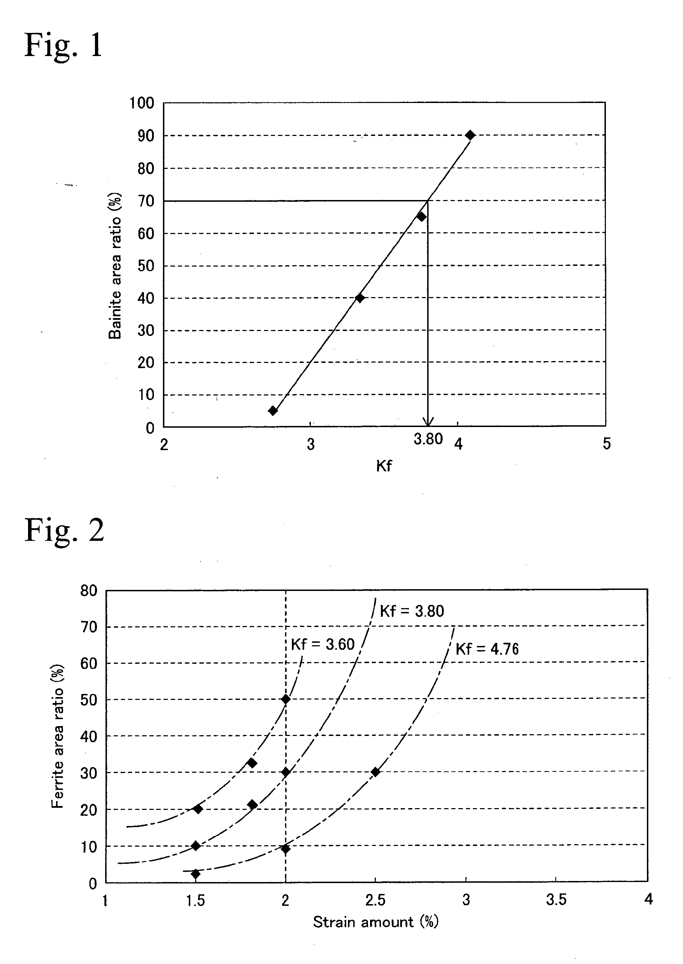

Therefore, an object of the present invention is to provide a production method for a crankshaft having high wear resistance, high fatigue strength, and high machinability, by preventing generation of ferrite as much as possible so as to smoothly facilitate age hardening at nitriding.
The inventors of the present invention have conducted intensive research to solve the above-described problem and have found the following. A hot forged part before soft nitriding treatment is made to have a micro metallic structure mainly made of a bainite (at least 70 %), and the hot forged part is soft-nitrided at a temperature between 550 to 650 °C, whereby mechanical characteristics such as fatigue strength are improved.
According to the research of the inventors, it was found that Kf can be used as an index of bainite forming stability (ferrite is not generated). In this case, when the amount of C is represented as [C %], the amount of Si is represented as [Si %], the amount of Mn is represented as [Mn %], the amount of Cr is represented as [Cr %], the amount of Mo is represented as [Mo %], and the amount of V is represented as [V %], Kf = 5[C %] - 0.168[Si %] + 1.8[Mn %] + 0.4[Cr %] + 2.5[Mo %] + 1.5[V %] -1. Fig. 1 is a graph showing a relationship between Kf value and bainite area ratio when various steel materials having a different Kf value were forged into crankshafts at not less than 1000 °C and were cooled at a cooling rate of 0.25 °C/second (which was relatively low rate among cooling rates by air cooling). As can be understood from Fig. 1, when the Kf value is greater than 3.80, the bainite area ratio is not less than 70 % (ferrite area ratio is not greater than 30 %). Therefore, when the Kf value is greater than 3.80, a hot forged part can be made to have a microstructure primarily composed of bainite (not less than 70 % by area ratio) at most cooling rates.
Mn is an element having high hardenability, and unlike Mo and V, Mn does not greatly decrease hot forging formability and machinability. The inventors have found that a hot forged part can be made to have a microstructure primarily composed of bainite (not less than 70 %) by adding not less than 1.0 mass % of Mn to the chemical composition of a steel material. In this case, the hot forging formability and the machinability are maintained at industrially producible levels.
The inventors have focused on Hf as an index of hardness of a hot forged part and have found the following. In this case, Hf = 24.96 x ([C %] - (1/18)[Si %] + (1/12)[Mn %] + (1/6)[Cr %] + 0.01 + (1/7)[Mo %] + (4/5)[V %]). By setting the value of Hf to be less than 19.5, machining such as cutting and the like is industrially practical with respect to a hot forged part which is not subjected to a heat treatment such as thermal refining and normalizing.
Moreover, the inventors have researched strengthening of a hot forged part by soft nitriding in the same manner as in a conventional crankshaft after machining. The inventors have investigated further strengthening of a hot forged part by performing both soft nitriding treatment and age hardening so as to increase internal hardness. Then, the inventors focused on Hg, which can be used as an index of internal hardness after soft nitriding, and they found the following. In this case, Hg = 32.16 x ([C %] + (3/13)[Si %] + (1/22)[Mn %] + (1/18)[Cr %] + (3/10)[Mo %] + (5/7)[V %]). By setting the value of Hg to be greater than 18.8, strength higher than that of a conventional crankshaft is obtained.
The present invention was achieved based on the above-described findings. That is, the present invention provides a production method for a crankshaft formed by hot forging and subsequent cooling, and the crankshaft has a metallic structure including a bainite at not less than 70 % by area ratio. The crankshaft consists of, by mass %, not less than 0.1 % and not greater than 0.4 % of C, not less than 0.3 % and not greater than 1.0 % of Si, not less than 1.0 % and not greater than 2.4 % of Mn, not less than 0.1 % and not greater than 1.0 % of Cr, not less than 0.1 % and not greater than 1.0 % of Mo, not less than 0.05 % and not greater than 0.5 % of V, not less than 0.01 % and not greater than 0.10 % of S, not greater than 0.02 % of P, and the balance of Fe and inevitable impurities. In this case, when the amount of C is represented as [C %], the amount of Si is represented as [Si %], the amount of Mn is represented as [Mn %], the amount of Cr is represented as [Cr %], the amount of Mo is represented as [Mo %], and the amount of V is represented as [V %], Kf is greater than 3.80, Hf is less than 19.5, and Hg is greater than 18.8 in the following first to third formulas.

### First Formula

$$Kf = 5[C\ \%] - 0.168[Si\ \%] + 1.8[Mn\ \%] + 0.4[Cr\ \%] + 2.5[Mo\ \%] + 1.5[V\ \%] - 1$$

### Second Formula

$$Hf = 24.96 \times ([C\ \%] - (1/18)[Si\ \%] + (1/12)[Mn\ \%] + (1/6)[Cr\ \%] + 0.01 + (1/7)[Mo\ \%] + (4/5)[V\ \%])$$

### Third Formula

$$Hg = 32.16 \times ([C\ \%] + (3/13)[Si\ \%] + (1/22)[Mn\ \%] + (1/18)[Cr\ \%] + (3/10)[Mo\ \%] + (5/7)[V\ \%])$$

The production method further includes heating the steel material at not less than 1150 °C; forming the steel material by hot forging at not less than 1000 °C; and cooling the steel material at a cooling rate of 0.25 °C/second to 1.5 °C/second, whereby a hot forged part having a microstructure including a bainite structure at not less than 70 %. The production method further includes machining the hot forged part; and soft nitriding the hot forged part at 550 to 650 °C for not less than 30 minutes.

### First Formula

$$Kf = 5[C\ \%] - 0.168[Si\ \%] + 1.8[Mn\ \%] + 0.4[Cr\ \%] + 2.5[Mo\ \%] + 1.5[V\ \%] - 1$$

## Second Formula

$$Hf = 24.96 \times ([C\%] - (1/18)[Si\%] + (1/12)[Mn\%] + (1/6)[Cr\%] + 0.01 + (1/7)[Mo\%] + (4/5)[V\%])$$

## Third Formula

$$Hg = 32.16 \times ([C\%] + (3/13)[Si\%] + (1/22)[Mn\%] + (1/18)[Cr\%] + (3/10)[Mo\%] + (5/7)[V\%]).$$

The reasons for limiting the amount of the elements, and the function of the present invention, will be described hereinafter. It should be noted that the symbol "%" represents "mass %" in the following descriptions.
C: 0.1 to 0.4 %
C is an element for obtaining strength and having an effect of precipitation strengthening by precipitating carbides while soft nitriding. If the amount of C is less than 0.1 %, these effects are not obtained. On the other hand, if the amount of C is greater than 0.4 %, hardness is too increased after hot forging, whereby the machinability is decreased. Therefore, the amount of C is set to be 0.1 to 0.4 %.
Si: 0.3 to 1.0 %
Si functions as a deoxidizer in steel refining and improves hardenability of a steel material. Moreover, Si increases resistance for temper softening and thereby improves strength after soft nitriding treatment. If the amount of Si is less than 0.3 %, these effects are not obtained. On the other hand, if the amount of Si is greater than 1.0 %, the machinability of a hot forged part is decreased. Therefore, the amount of Si is set to be 0.3 to 1.0 %.
Mn: 1.0 to 2.4 %
Mn is an element which improves hardenability of a steel material and bainitizes a micro metallic structure of a hot forged part. If the amount of Mn is less than 1.0 %, these effects are not obtained. On the other hand, if the amount of Mn is greater than 2.4 %, the machinability of a hot forged part is decreased. Therefore, the amount of Mn is set to be 1.0 to 2.4 %.
Cr: 0.1 to 1.0%
Cr is an element which improves hardenability and nitridability of a steel material and hardens the surface hardness of the steel material, and Cr thereby improves fatigue strength. If the amount of Cr is less than 0.1 %, these effects are not obtained. On the other hand, if the amount of Cr is greater than 1.0 %, the machinability of a hot forged part is decreased. Therefore, the amount of Cr is set to be 0.1 to 1.0 %.
Mo: 0.1 to 1.0%
Mo is an element which improves hardenability of a steel material and bainitizes a micro metallic structure of a hot forged part. Moreover, Mo improves fatigue strength after soft nitriding treatment by precipitation strengthening. If the amount of Mo is less than 0.1 %, these effects are not obtained. On the other hand, if the amount of Mo is greater than 1.0 %, hot forging formability and the machinability of a hot forged part are decreased. Therefore, the amount of Mo is set to be 0.1 to 1.0 %.
V: 0.05 to 0.5 %
V is an element having effects similar to those of Mo. If the amount of V is less than 0.05 %, these effects are not obtained. On the other hand, if the amount of V is greater than 0.5 %, the machinability of a hot forged part is decreased. Therefore, the amount of V is set to be 0.05 to 0.5 %.
S: 0.01 to 0.1 %
S can form sulfides in a steel material and improves cutting workability. If the amount of S is less than 0.01 %, these effects are not obtained. On the other hand, if the amount of S is greater than 0.1 %, fatigue strength is not effectively improved. Therefore, the amount of S is set to be 0.01 to 0.1 %.
P: not greater than 0.02 %
P is an inevitable impurity included in a steel material. If the amount of P is greater than 0.02 %, fatigue strength is decreased. Therefore, the amount of P is set to be not greater than 0.02 %.
Kf: greater than 3.80

A crankshaft is a part with a large mass, whereby the amount of working strain introduced in hot forging and the cooling rate vary depending on dimensions, shape, and area. Therefore, it is desirable to obtain a bainite structure at a cooling rate in a wide range from 0.25 to 1.5 °C/second. The hot forging of a crankshaft is generally performed at approximately 1200 °C at strain amount of about 2 %. In such a condition, when the value of Kf represented by the first formula is greater than 3.80, the ferrite ratio can be not greater than 30 % as shown in Fig. 2. Therefore, the value of Kf is set to be greater than 3.80. It should be noted that the "Strain amount (%)" shown in Fig. 2 is calculated by forging CAE analysis.

Hf: less than 19.5

The value of Hf represented by the second formula must be limited in order to suitably harden a hot forged part and obtain superior machinability. In a structure mainly made of a bainite, if the value of Hf is not less than 19.5, too much of the alloy elements are added, whereby hardness of a hot forged part is greatly increased to be not less than 300 Hv, and machinability is greatly decreased. Therefore the value of Hf is set to be less than 19.5.

Hg: greater than 18.8

The value of Hg represented by the third formula must be greater than a predetermined value in order to appropriately increase internal hardness after soft nitriding and obtain high fatigue strength. In a structure primarily made of a bainite, if the value of Hg is not greater than 18.8, the internal hardness after soft nitriding comes to be not greater than 280 Hv, whereby sufficient fatigue strength is not obtained. Therefore, the value of Hg is set to be greater than 18.8.

According to the present invention, by limiting the amounts of the above-described elements and by limiting the values of Kf, Hf, and Hg, generation of ferrite is prevented as much as possible, and thereby age hardening at nitriding is smoothly proceeded. Accordingly, high wear resistance, high fatigue strength, and superior machinability are simultaneously obtained.

BRIEF DESCRIPTION OF THE DRAWINGS

Fig. 1 is a graph showing a relationship between the value of Kf and bainite area ratio.
Fig. 2 is a graph showing a relationship between strain amount and ferrite area ratio in hot forging.
Fig. 3 is a side view showing a specimen for a rotating bending fatigue test, which was made in the example of the present invention.
Fig. 4 is a graph showing a relationship between ferrite area ratio and fatigue strength.

PREFERRED EMBODIMENTS OF THE INVENTION

In the present invention, in addition to the above-described compositions, the following compositions may be added: not greater than 0.01 % of Ti; 0.05 to 1.5 % of Ni; 0.01 to 0.5 % of Cu; 0.003 to 0.1 % of Al; 0.002 to 0.02 % of N; 0.001 to 0.01 % of Ca; and 0.001 to 0.006 % of B. The grounds for limiting the amounts of these compositions will be described hereinafter.

Ti: not greater than 0.01 %

Ti is an element for improving hardenability of a steel material. However, Ti is an element which may not securely solid-solved in a steel. Therefore, there may be cases in which Ti is not completely solid-solved at solution treatment in a production process if Ti is added at not less than 0.01 %. In this case, not solid-solved TiC refines a prior γ grain size and facilitates generation of ferrite, whereby it is difficult to form a hot forged part having a micro metallic structure including not less than 70 % of a bainite structure. Therefore, the amount of Ti is set to be not greater than 0.01 %.

Ni: 0.05 to 1.5 %

Ni improves strength of a soft-nitridized machine component made of a steel after soft nitriding, and Ni prevents generation of cracks due to Cu, which is an inevitable impurity, at hot rolling. If the amount of Ni is less than 0.05 %, these effects are not obtained. On the other hand, if the amount of Ni is greater than 1.5 %, hardness of a hot forged part is increased too much, whereby cutting workability is decreased. Therefore, the amount of Ni is set to be 0.05 to 1.5 %.

N: 0.002 to 0.02 %

N forms nitrides such as TiN, NbN, and AlN, and refines the crystal grains, thereby improving impact characteristics of a steel material. If the amount of N is less than 0.002 %, a sufficient amount of nitrides is not generated, and coarse grains are formed, whereby the impact characteristics of a steel material is decreased. On the other hand, if the amount of N is greater than 0.02 %, generation of carbides is prevented during soft nitriding treatment, whereby precipitation strengthening characteristic is decreased. Therefore, the amount of N is set to be 0.002 to 0.02 %.

Al: 0.003 to 0.1 %

Al may be added so as to increase surface hardness. In this case, if the amount of Al is less than 0.003 %, such effect is not sufficiently obtained. On the other hand, the surface hardness is increased with increase in the amount of Al, whereas dispersion of nitrogen into the inside of a steel material is prevented at soft nitriding, and thereby the depth of a hardened layer is decreased. Therefore, the upper limit of the amount of Al is set to be 0.1 %, in which the negative effects of A1 to the depth of the hardened layer are small, and the effects of A1 are obtained only for increasing the surface hardness.

Ca: 0.001 to 0.01 %

Ca is an element which may be used for improving machinability in machining processing. In order to improve the machinability, MnS, Ca oxides, and Ca sulfides are dispersed into a matrix of a steel material. If the amount of Ca is less than 0.001 %, the effect for improving the machinability is not sufficiently obtained. On the other hand, if the amount of Ca is greater than the upper limit of 0.01 %, the toughness of a steel is decreased. Therefore, the amount of Ca is set to be 0.001 to 0.01 %.

B: 0.001 to 0.006 %

B is an element for improving the hardenability of a steel material. If the amount of B is less than 0.001 %, the effect is not sufficiently obtained. On the other hand, even when the amount of B is greater than 0.006 %, the effect is not further improved. Therefore, the amount of B is set to be 0.001 to 0.006 %.

EXAMPLES

The present invention will be described in detail with reference to a practical examples hereinafter.

Steels having compositions shown in Table 1 were prepared and were ingoted in a vacuum melting furnace. Then, the steels were hot rolled into hot-rolled steel bars having a diameter of 90 mm. The hot-rolled steel bars were solved at 1300 °C for 0.5 hours, and the hot-rolled steel bars were hot forged into round bars having a diameter of 45 mm at 1200 °C and were cooled at 0.5 °C/second. It should be noted that the values exceeding the range of the present invention are underlined in the Table 1.

Table 1

|    | C | Si | Mn | p | S | Cr | Mo | V | Ti | Ni | Cu | B | Al | Ca | N |
|----|------|------|------|-------|-------|------|------|------|-------|------|------|--------|-------|--------|-------|
| 1 | 0.3 | 0.3 | 1.35 | 0.01 | 0.064 | 0.2 | 0.4 | 0.33 | | 0.11 | | | 0.005 | 0.0038 | 0.004 |
| 2 | 0.28 | 0.35 | 1.08 | 0.012 | 0.058 | 0.45 | 0.38 | 0.26 | | 0.35 | | | 0.003 | 0.0078 | 0.014 |
| 3 | 0.15 | 0.5 | 1.54 | 0.008 | 0.022 | 0.7 | 0.65 | 0.24 | 0.06 | | 0.11 | | 0.007 | 0.0055 | 0.008 |
| 4 | 0.11 | 0.74 | 1.28 | 0.008 | 0.052 | 0.55 | 0.92 | 0.25 | | | | 0.0021 | 0.015 | 0.0049 | 0.007 |
| 5 | 0.23 | 0.78 | 1.73 | 0.012 | 0.049 | 0.17 | 0.24 | 0.17 | | 0.01 | | | 0.009 | 0.0034 | 0.005 |
| 6 | 0.33 | 0.54 | 1.44 | 0.009 | 0.078 | 0.36 | 0.15 | 0.18 | 0.004 | | | | 0.018 | 0.0088 | 0.014 |
| 7 | 0.25 | 0.42 | <u>0.94</u> | 0.008 | 0.055 | 0.48 | 0.44 | 0.4 | | | | | <u>0.001</u> | 0.001 | 0.018 |
| 8 | <u>0.44</u> | 0.33 | 0.55 | 0.011 | 0.082 | 0.38 | 0.2 | 0.34 | 0.01 | 0.64 | | | 0.01 | 0.0048 | 0.012 |
| 9 | 0.15 | 0.3 | <u>0.29</u> | 0.012 | 0.037 | 0.38 | 1 | <u>0.52</u> | | | | | 0.003 | 0.0024 | 0.016 |
| 10 | 0.22 | 0.53 | <u>0.64</u> | 0.011 | 0.011 | 0.43 | 0.56 | 0.48 | 0.007 | | 0.31 | | 0.009 | 0.0038 | 0.003 |
| 11 | <u>0.68</u> | 0.35 | 1.23 | 0.011 | 0.093 | 0.38 | 0.68 | 0.33 | | | | | 0.007 | 0.0013 | 0.013 |
| 12 | 0.17 | 0.33 | 1.23 | 0.013 | 0.052 | 0.45 | 0.38 | <u>0.63</u> | 0.008 | | | | <u>0.001</u> | 0.0076 | 0.011 |
| 13 | 0.18 | 0.66 | 1.37 | 0.01 | 0.042 | 0.77 | <u>1.27</u> | 0.34 | 0.003 | | | | 0.004 | 0.0059 | 0.005 |
| 14 | 0.19 | 0.44 | 1.12 | 0.009 | 0.049 | 0.41 | | 0.44 | | 0.29 | | | 0.013 | 0.0056 | 0.009 |
| 15 | 0.2 | 0.41 | <u>2.52</u> | 0.01 | 0.022 | 0.63 | 0.28 | 0.31 | | | | | 0.004 | 0.0057 | 0.009 |
| 16 | 0.35 | 0.35 | 1.8 | 0.012 | 0.071 | 0.33 | | | | | 0.26 | | 0.008 | 0.0044 | <u>0.001</u> |

The hot forged parts after cooling were subjected to microstructure observations, and a bainite area ratio in a structure and Vickers hardness were measured. In the measurement of the bainite area ratio, 20 visual fields were randomly selected from the vicinity of the center of the round bar having a diameter of 45 mm. Then, the structure was observed in the visual field by an optical microscope, whereby the bainite area ratio (%) was measured. The Vickers hardness was measured by a micro Vickers hardness tester.

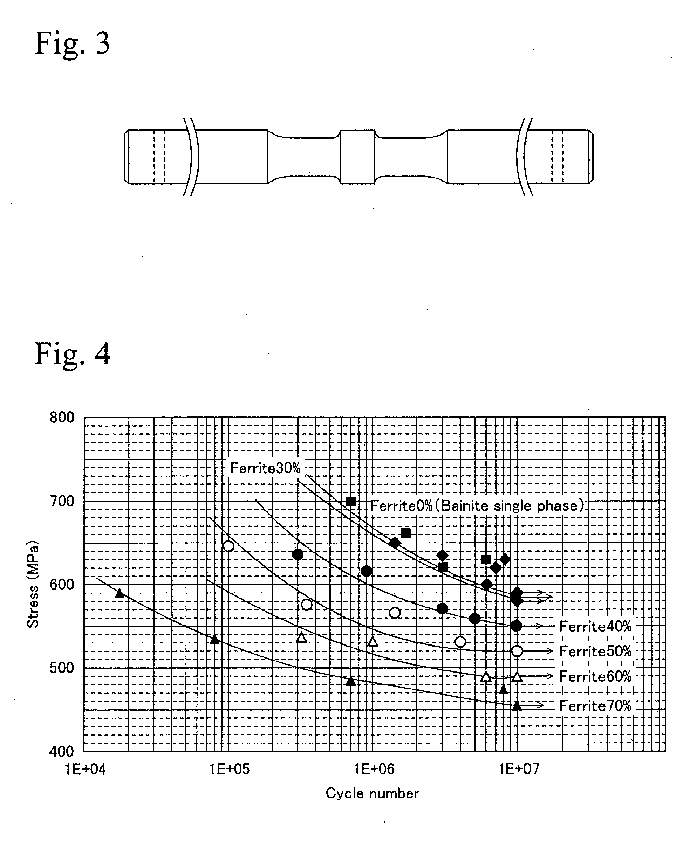

Next, the hot forged parts after cooling were machined into specimens for rotating bending fatigue test, which had a shape shown in Fig. 3, and the specimens were subjected to soft nitriding treatment at 600 °C for 2 hours. At that time, a nitriding atmosphere condition was set to use mixed gas consisting of 49 volume % of $N_2$, 49 volume % of $NH_3$, and 2 volume % of $CO_2$. Each of the samples after soft nitriding treatment was subjected to a rotating bending fatigue test, and a fatigue limit, at which the sample was not fractured at $1 \times 10^7$ cycles, was defined as a fatigue strength. In addition, a hardness profile was measured by Vickers hardness. These measured results are shown in Table 2. It should be noted that a "compound layer" shown in the Table 2 represents a "nitride layer". The values exceeding the target values are underlined in the Table 2.

Table 2

|  | Kf | Hf | Hg | Bainite ratio (%) | Hardness of hot forged part (Hv) | Internal hardness after soft nitriding (Hv) | Hardness right under compound layer (Hv) | Rotating bending fatigue strength (MPa) |
|---|---|---|---|---|---|---|---|---|
|  | 3.80< | <19.5 | 18.8 < | 70< | <300 | 280< |  | 500< |
| 1 | 4.46 | 19.1 | 25.9 | 100 | 296 | 351 | 590 | 604 |
| 2 | 3.83 | 18.0 | 24.6 | 70 | 285 | 338 | 611 | 590 |
| 3 | 4.70 | 16.5 | 23.8 | 100 | 270 | 330 | 663 | 582 |
| 4 | 5.22 | 15.8 | 26.5 | 100 | 263 | 357 | 684 | 615 |
| 5 | 4.05 | 13.4 | 22.2 | 80 | 239 | 314 | 530 | 540 |
| 6 | 3.94 | 16.3 | 22.9 | 75 | 268 | 321 | 515 | 555 |
| 7 | <u>3.76</u> | 19.4 | 26.8 | <u>65</u> | 270 | <u>275</u> | 450 | <u>450</u> |
| 8 | <u>3.34</u> | <u>22.0</u> | 29.6 | <u>40</u> | 245 | <u>260</u> | 420 | <u>430</u> |
| 9 | 3.65 | <u>19.7</u> | 29.7 | 75 | <u>302</u> | 389 | 698 | 660 |
| 10 | <u>3.45</u> | <u>19.7</u> | 29.1 | <u>45</u> | 248 | <u>262</u> | 428 | <u>435</u> |
| 11 | 6.90 | <u>29.8</u> | 41.0 | 100 | <u>403</u> | 502 | 640 | 758 |
| 12 | 4.08 | <u>22.4</u> | 28.6 | 90 | <u>329</u> | 378 | 638 | 628 |
| 13 | 6.24 | <u>21.1</u> | 34.1 | 100 | <u>316</u> | 433 | 712 | 682 |
| 14 | <u>2.73</u> | 17.6 | 22.7 | <u>5</u> | 200 | <u>205</u> | 380 | <u>400</u> |
| 15 | 5.88 | <u>19.7</u> | 24.1 | 100 | <u>302</u> | 333 | 648 | 650 |
| 16 | 4.06 | 13.6 | <u>17.0</u> | 100 | 241 | <u>262</u> | 498 | <u>410</u> |

As shown in Table 2, in the steels 1 to 6 of the present invention, the hardness after hot forging was not greater than 300 Hv and was low, and the structure, the hardness, and the fatigue strength satisfy the target values. In the comparative steels 7, 8, and 10, the amount of Mn was less than the amount of the range in the present invention, whereby the value of Kf was less than the value of the range of the present invention, and the bainite ratio was not greater than 70 %. Therefore, the internal hardnesses after soft nitriding were less than the target value, and the fatigue strengths were low. In the comparative steel 7, the amount of Mn was not greater than 1.0 %, and Mo and V, which increased hardenability, were added to compensate for the low amount of Mn, but the value of Kf was less than the value of the range of the present invention.

In the comparative steel 11, the amount of C was greater than the range of the present invention, whereby the value of Hf was greater than the range of the present invention, and the hardness (workability) after forging was greater than the target value. In the comparative steels 9, 12, and 13, the amount of Mo or V was greater than the range of the present invention, whereby the value of Hf was greater than the range of the present invention, and the hardness (workability) after forging was greater than the target value. In the comparative steel 15, the amount of Mn was greater than the range of the present invention, whereby the hardness after forging was increased, which inversely affects the machinability afterward. In the comparative steel 14, the amount of Mo was less than the range of the present invention (Mo was not included), whereby the value of Kf was less than the range of the present invention, and the bainite ratio was not greater than 70 %. Therefore, the internal hardness after soft nitriding was less than the target value, and the strength was low. In the comparative steel 16, the amounts of Mo and V were less than the range of the present invention (Mo and V were not included). Therefore, the value of Hg was less than the range of the present invention, the internal hardness after soft nitriding was less than the target value, and the fatigue strength was low.

Then, the steels 1 and 2 of the present invention as shown in Table 2 were subjected to the rotating bending fatigue test, and the cycle times and fatigue strength (fatigue limit at which the steel of the present invention was not fractured at the cycle times) were measured. In addition, the comparative steels, in which the ferrite area ratio was 40 %, 50 %, 60 %, and 70 %, respectively, were subjected to the same test, and fatigue strengths were measured for comparison. These results are shown in Fig. 4. As shown in Fig. 4, the steels of the present invention had much higher fatigue strength than those of the comparative steels.

According to the crankshaft production method of the present invention, high wear resistance, high tensile strength, and high fatigue strength are obtained, and machining characteristics are improved. Therefore, the crankshaft production method of the present invention can be applied in the fields of automobiles and other internal combustion engines.

A crankshaft is formed by hot forging and subsequent cooling and has a metallic structure including a bainite at not less than 70 % by area ratio. Moreover, Kf is greater than 3.80, Hf is less than 19.5, and Hg is greater than 18.8 in the following first to third formulas:

## First Formula

$$Kf = 5[C\ \%] - 0.168[Si\ \%] + 1.8[Mn\ \%] + 0.4[Cr\ \%] + 2.5[Mo\ \%] + 1.5[V\ \%] - 1$$

$$Hf = 24.96 \times ([C\ \%] - (1/18)[Si\ \%] + (1/12)[Mn\ \%] + (1/6)[Cr\ \%] + 0.01 + (1/7)[Mo\ \%] + (4/5)[V\ \%])$$

## Third Formula

$$Hg = 32.16 \times ([C\ \%] + (3/13)[Si\ \%] + (1/22)[Mn\ \%] + (1/18)[Cr\ \%] + (3/10)[Mo\ \%] + (5/7)[V\ \%]).$$

## Claims

1. A production method for a crankshaft, comprising:

preparing a steel material consisting of, by mass %, not less than 0.1 % and not greater than 0.4 % of C, not less than 0.3 % and not greater than 1.0 % of Si, not less than 1.0 % and not greater than 2.4 % of Mn, not less than 0.1 % and not greater than 1.0 % of Cr, not less than 0.1 % and not greater than 1.0 % of Mo, not less than 0.05 % and not greater than 0.5 % of V, not less than 0.01 % and not greater than 0.10 % of S, not greater than 0.02 % of P, optionally may be added: not greater than 0.01 % of Ti; 0.05 to 1.5 % of Ni; 0.01 to 0.5 % of Cu; 0.003 to 0.1 % of Al; 0.002 to 0.02 % of N; 0.001 to 0.01 % of Ca; and 0.001 to 0.006 % of B, and the balance of Fe and inevitable impurities, the steel satisfying a condition in which Kf is greater than 3.80, when strain amount is about 2% in the hot forging at approximately 1200°C, Hf is less than 19.5, and Hg is greater than 18.8 in the following first to third formulas, when the amount of C is represented as [C %], the amount of Si is represented as [Si %], the amount of Mn is represented as [Mn %], the amount of Cr is represented as [Cr %], the amount of Mo is represented as [Mo %], and the amount of V is represented as [V %];
heating the steel at not less than 1150°C;
forming the steel by hot forging at not less than 1000°C;

cooling the steel at a cooling rate of 0.25°C/second to 1.5°C/second, whereby a hot forged part having a micro metallic structure including a bainite structure at not less than 70 % is obtained;
machining the hot forged part; and
soft nitriding the hot forged part at 550 to 650°C for not less than 30 minutes,

### First Formula

$$Kf = 5[C \%] - 0.168[Si \%] + 1.8[Mn \%] + 0.4[Cr \%] + 2.5[Mo \%] + 1.5[V \%] - 1$$

### Second Formula

$$Hf = 24.96 \times ([C \%] - (1/18)[Si \%] + (1/12)[Mn \%] + (1/6)[Cr \%] + 0.01 + (1/7)[Mo \%] + (4/5)[V \%])$$

### Third Formula

$$Hg = 32.16 \times ([C \%] + (3/13)[Si \%] + (1/22)[Mn \%] + (1/18)[Cr \%] + (3/10)[Mo \%] + (5/7)[V \%]).$$

**Patentansprüche**

1. Verfahren zur Herstellung einer Kurbelwelle, umfassend:

   Herstellen eines Stahlmaterials, bestehend aus, in Gew.%, nicht weniger als 0,1% und nicht mehr als 0,4% C, nicht weniger als 0,3% und nicht mehr als 1,0% Si, nicht weniger als 1,0% und nicht mehr als 2,4% Mn, nicht weniger als 0,1% und nicht mehr als 1,0% Cr, nicht weniger als 0,1% und nicht mehr als 1,0% Mo, nicht weniger als 0,05% und nicht mehr als 0,5% V, nicht weniger als 0,01% und nicht mehr als 0,10% S, nicht mehr als 0,02% P, wobei wahlweise zugegeben werden kann: nicht mehr als 0,01 % Ti, 0,05 bis 1,5% Ni, 0,01 bis 0,5% Cu, 0,003 bis 0,1% Al, 0,002 bis 0,02% N, 0,001 bis 0,01 % Ca und 0,001 bis 0,006% B und der Rest Fe und unvermeidbare Verunreinigungen sind, wobei der Stahl einen Zustand erfüllt, in dem in den nachfolgenden Formeln 1 bis 3 Kf größer ist als 3,80, wenn das Verformungsausmaß beim Warmschmieden bei ungefähr 1200°C etwa 2% beträgt, Hf kleiner ist als 19,5, und Hg größer ist als 18.8, wenn die Menge an C als [C%] angegeben ist, die Menge an Si als [Si%] angegeben ist, die Menge an Mn als [Mn%] angegeben ist, die Menge an Cr als [Cr%] angegeben ist, die Menge an Mo als [Mo%] angegeben ist und die Menge an V als [V%] angegeben ist;
   Erwärmen des Stahls auf nicht weniger als 1150°C,
   Formen des Stahls durch Warmschmieden bei nicht weniger als 1000°C,
   Abkühlen des Stahls mit einer Kühlgeschwindigkeit von 0,25°C/s bis 1,5°C/s, wobei ein warmgeschmiedetes Teil mit einer metallischen Mikrostruktur mit einer Bainitstruktur von nicht weniger als 70% erhalten wird;
   Bearbeiten des warmgeschmiedeten Teils und
   Weichnitrieren des warmgeschmiedeten Teils bei 550 bis 650C für nicht weniger als 30 Minuten

Formel 1:

$$Kf = 5 [C\%] - 0,168 [Si\%] + 1,8 [Mn\%] + 0,4 [Cr\%] + 2,5 [Mo\%] + 1,5 [V\%] -1$$

Formel 2:

$$Hf = 24{,}96 \times ([C\%] - (1/18)\,[Si\%] + (1/12)\,[Mn\%] + (1/6)\,[Cr\%] + 0{,}01$$
$$+ (1/7)\,[Mo\%] + (4/5)\,[V\%])$$

Formel 3:

$$Hg = 32{,}16 \times ([C\%] + (3/13)\,[Si\%] + (1/22)\,[Mn\%] + (1/18)\,[Cr\%] + (3/10)\,[Mo\%]$$
$$+ (5/7)\,[V\%]).$$

**Revendications**

1. Procédé de fabrication pour un vilebrequin, comprenant:

la préparation d'un matériau à base d'acier constitué de, en % en masse, pas moins de 0,1% et pas plus de 0,4 % de C, pas moins de 0,3 % et pas plus de 1,0 % de Si, pas moins de 1,0 % et pas plus de 2,4 % de Mn, pas moins de 0,1 % et pas plus de 1,0 % de Cr, pas moins de 0,1 % et pas plus de 1,0 % de Mo, pas moins de 0,05 % et pas plus de 0,5 % de V, pas moins de 0,01 % et pas plus de 0,10 % de S, pas plus de 0,02 % de P, en option peut être ajouté: pas plus de 0,01 % de Ti; 0,05 à 1,5 % de Ni; 0,01 à 0,5 % de Cu; 0,003 à 0,1 % de Al; 0,002 à 0,02 % de N; 0,001 à 0,01 % de Ca; et 0,001 à 0,006 % de B et le reste étant Fe et les impuretés inévitables, l'acier satisfaisant à une condition dans laquelle Kf est supérieur à 3,80, lorsque la quantité de déformation est d'environ 2% dans le forgeage à chaud à environ 1200°C, Hf est inférieur à 19,5 et Hg est supérieur à 18,8 dans les formules une à trois qui suivent, la quantité de C est représentée par [C %], la quantité de Si est représentée par [Si %], la quantité de Mn est représentée par [Mn %], la quantité de Cr est représentée par [Cr %], la quantité de Mo est représentée par [Mo %], la quantité de V est représentée par [V %];
le chauffage de l'acier à pas moins de 1150°C;
le formage de l'acier par forgeage à chaud à pas moins de 1000 °C;
le refroidissement de l'acier à une vitesse de refroidissement de 0,25°C/seconde à 1,5°C/seconde, suite à quoi on obtient une pièce forgée à chaud ayant une structure micrométallique incluant une structure de bainite à pas moins de 70 %;
l'usinage de la pièce forgée à chaud; et
la nitruration douce de la pièce forgée à chaud à 550 à 650°C pendant pas moins de 30 minutes,

```
        Première formule


        Kf= 5[C %] - 0,168[Si %] + 1,8[Mn %] + 0,4[Cr %]
 + 2,5[Mo %] + 1,5[V%] - 1
```

Deuxième formule

$$Hf = 24,96 \times ([C\ \%] - (1/18)[Si\ \%] + (1/12)[Mn\ \%] + (1/6)[Cr\ \%] + 0,01 + (1/7)[Mo\ \%] + (4/5)[V\ \%])$$

Troisième formule

$$Hg = 32,16 \times ([C\ \%] + (3/13)[Si\ \%] + (1/22)[Mn\ \%] + (1/18)[Cr\ \%] + (3/10)[Mo\ \%] + (5/7)[V\ \%]).$$

Fig. 1

Fig. 2

# Fig. 3

# Fig. 4

**EP 2 357 262 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007146232 A

- JP 2008223083 A